# EUROPÄISCHE PATENTSCHRIFT

(11) **EP 1 084 052 B1**
(45) Veröffentlichungstag und Bekanntmachung des Hinweises auf die Patenterteilung: **02.05.2007**
(21) Anmeldenummer: 99936335.1
(22) Anmeldetag: 27.05.1999
(51) Int. Cl.: B60R 21/20

(54) **FAHRZEUGTEIL MIT EINER AIRBAGVORRICHTUNG UND HERSTELLUNGSVERFAHREN FÜR EIN SOLCHES FAHRZEUGTEIL**
VEHICLE PART WITH AN AIRBAG DEVICE AND METHOD FOR PRODUCING A VEHICLE PART OF THIS TYPE
PARTIE DE VEHICULE COMPORTANT UN AIRBAG ET PROCEDE DE FABRICATION D'UNE TELLE PARTIE DE VEHICULE

(30) Priorität: 27.05.1998 DE 29809554 U; 27.10.1998 DE 29819165 U
(43) Veröffentlichungstag der Anmeldung: 21.03.2001
(73) Patentinhaber: Volkswagen Aktiengesellschaft, 38436 Wolfsburg (DE)
(72) Erfinder: MÜLLER, Olaf, D-65428 Rüsselsheim (DE)
(74) Vertreter: Lindner, Manfred Klaus
(86) Internationale Anmeldenummer: PCT/DE1999/001564
(87) Internationale Veröffentlichungsnummer: WO 1999/061288

(56) Entgegenhaltungen:
- DE-A- 4 442 543
- DE-A- 19 726 878
- DE-U- 29 721 681
- US-A- 5 108 128
- US-A- 5 429 784
- PATENT ABSTRACTS OF JAPAN vol. 1997, no. 06, 30. Juni 1997 (1997-06-30) & JP 09 048316 A (TOYO TIRE &AMP ET AL.), 18. Februar 1997 (1997-02-18)

## Beschreibung

Die Erfindung betrifft ein Fahrzeugteil mit einer Airbagvorrichtung nach dem Oberbegriff des Anspruchs 1 sowie ein Herstellungsverfahren für ein solches Fahrzeugteil nach dem Oberbegriff des Anspruchs 10, bekannt aus der DE-A-4 442 543.

Moderne Fahrzeuge enthalten Armaturenbretter und Lenkräder, in denen Airbagvorrichtungen integriert sind. Damit bei einem Unfall ein Gassack einer Airbagvorrichtung aus einem Armaturenbrett oder Lenkrad austreten kann, sind in letzterem Abdeckeinrichtungen, wie z.B. Klappen enthalten, die sich vor oder während einer Entfaltung des Gassackes öffnen.

Bei einer Airbagvorrichtung mit einziehbaren Abdeckeinrichtungen, wie z.B. einer oder zwei Klappen, werden sich im Normalfall die Abdeckeinrichtungen, da sie fest mit der Rückziehmechanik verbunden sind, zurückziehen lassen. Dabei besteht die Gefahr, daß die Oberflächenschicht, die auch als Außenhaut bezeichnet werden kann, von den Abdeckeinrichtungen abreißt. Ist, wie es häufig üblich ist, zwischen der Oberflächenschicht einerseits und dem Träger und den Abdeckeinrichtungen andererseits Schaummaterial enthalten, so kann die Verbindung zwischen der Außenhaut und dem Schaummaterial und/oder zwischen dem Schaummaterial und den Abdeckeinrichtungen abreißen. Dies kann dann dazu führen, daß von dem Gassack bei seiner Entfaltung Teile der Außenhaut und/oder ggf. des Schaummaterials nach außen zum Insassen hin gestoßen werden, und ein Herumfliegen von losen Partikeln ist nicht ausgeschlossen. Dies begründet eine Gefährdung des/der Insassen.

Es ist daher das Ziel, ein Fahrzeugteil mit einer Airbagvorrichtung sowie ein Herstellungsverfahren für ein solches Fahrzeugteil anzugeben, um eine erhöhte Sicherheit im Falle einer Auslösung der Airbagvorrichtung zu gewährleisten.

Dieses Ziel wird vorrichtungsmäßig mit einen Fahrzeugteil mit einer Airbagvorrichtung nach dem Anspruch 1 erreicht.

Bei einem solchen Fahrzeugteil mit einer Airbagvorrichtung und einem Träger sind an die Airbagvorrichtung Abdeckeinrichtungen gekoppelt, die vor einer Auslösung der Airbagvorrichtung in einer Ruhelage zumindest im wesentlichen bündig in einer Öffnung in dem Träger aufgenommen sind und infolge einer Auslösung der Airbagvorrichtung mittels einer Mechanik von einem Insassen weg in eine Rückzugslage zumindest im wesentlichen hinter oder in das Fahrzeugteil gebracht werden, und weisen der Träger und die Abdeckeinrichtungen zum Insassen hin eine gemeinsame Oberflächenschicht auf. Ferner sind Verbindungseinrichtungen vorgesehen, mittels denen die Oberflächenschicht im Bereich der Abdeckeinrichtungen wenigstens benachbart Teilen des Umfangs der Öffnung fest mit den Abdeckeinrichtungen und/oder der Mechanik verbunden ist.

Durch diese Maßnahmen wird bei dem erfindungsgemäßen Fahrzeugteil gegenüber dem Stand der Technik als weitere Verbesserung verhindert, daß sich durch das Rückziehen der Klappe oder allgemein der Abdeckeinrichtungen letztere von der Oberflächenschicht trennen und Teile der Oberflächenschicht und/oder eines eventuell zwischen der Oberflächenschicht einerseits und dem Träger und den Abdeckeinrichtungen andererseits enthaltenen Schaummaterials abtrennen und herumfliegen können.

Die Erfindung ist insbesondere, jedoch nicht ausschließlich, bei einem Fahrer- oder Lenkrad-Airbag oder einem Beifahrerairbag mit einziehbarer Abdeckung anwendbar. Die entsprechenden Fahrzeugteile sind somit das Lenkrad bzw. das Armaturenbrett eines Fahrzeuges, wobei beispielsweise auch Seiten-, Dach- oder Sitzverkleidungen geeignet ausgestattet werden können, um an allen gewünschten oder erforderlichen Orten in einem Fahrzeug Airbags vorsehen zu können.

Gemäß einer bevorzugten Weiterbildung der Erfindung ist bei dem Fahrzeugteil vorgesehen, daß die Oberflächenschicht entsprechend der Form der Öffnung und/oder der Abdeckeinrichtungen mit Schwächungen oder Dünnstellen versehen ist. Dadurch wird in vorteilhafter Weise ein gezieltes und leichtes Aufreißen der Oberflächenschicht wenigstens um die Abdeckeinrichtungen herum beim Rückziehen der Abdeckeinrichtungen und/oder Entfalten des Gassackes erreicht.

Insbesondere ist es bei einem Fahrzeugteil nach der Erfindung vorteilhaft, wenn die Abdeckeinrichtungen wenigstens zwei Klappen enthalten, und wenn vorzugsweise weiterhin die Oberflächenschicht im Bereich zwischen den Klappen mit Schwächungen oder Dünnstellen versehen ist. Mehrere Klappen führen zu einem möglichst schnellen und leichten Öffnen, was durch die erleichterte Reißbarkeit der Oberflächenschicht zwischen einzelnen Klappen weiter unterstützt wird.

Bevorzugt ist es, wenn Schwächungen oder Dünnstellen der Oberflächenschicht nicht auf deren im ins Fahrzeug eingebauten Zustand den Insassen zugewandten Sichtseite wahrnehmbar sind. Dadurch wird ein angenehm und wertvoll erscheinendes Äußeres der Oberflächenschicht erreicht.

Die Schwächungen oder Dünnstellen können über ihren Verlauf gleichmäßige oder stellenweise, insbesondere regelmäßige, Materialdünnstellen und/oder Perforationen und/oder Mikroperforationen des Materials enthalten. Damit kann in vorteilhafter Weise in Abhängigkeit vom Material der Oberflächenschicht und deren Dicke für ein optimales Reißverhalten der Oberflächenschicht gesorgt werden.

Im Rahmen einer bevorzugten Ausgestaltung der Erfindung ist vorgesehen, daß die Verbindungseinrichtungen an der Oberflächenschicht angebrachte oder ausgebildete, vorzugsweise integral ausgebildete Stege und/oder Lappen enthalten, die mit den Abdeckeinrichtungen und/oder der Mechanik verbunden sind. Dies hat den Vorteil, daß solche Verbindungseinrichtungen ohne zusätzliche Teile direkt bei der Herstellung der Oberflächenschicht mit gefertigt werden können.

Wesentlich ist bei dem erfindungsgemäßen Fahrzeugteil vorgesehen, daß die Verbindungseinrichtungen Gewebematerial enthalten, das fest verbunden ist mit oder enthalten ist in oder umgeben ist von dem Material der Oberflächenschicht und mit den Abdeckeinrichtungen und der Mechanik verbunden ist. Dadurch kann in vorteilhafter Weise auch in Abhängigkeit von z.B. Platz- und Haltbarkeitserfordernissen eine ausreichend dauerhafte und feste Verbindung zwischen der Oberflächenschicht und den Abdeckeinrichtungen erreicht werden.

Die vorstehend angegebene Ausführungsmöglichkeit der Erfindung kann dadurch weitergebildet werden, daß das Gewebe von den Abdeckeinrichtungen bis über den Umfang der Öffnung des Trägers hinaus reicht, und/oder daß das Gewebe ggf. auch zumindest teilweise im Bereich von Schwächungen oder Dünnstellen längs des Umfangs der Öffnung des Trägers vorgesehen ist. Damit läßt sich der Vorteil erreichen, daß die Oberflächenschicht in nicht unterstützten Bereichen, wie z.B. Fugen zwischen Träger- und Abdeckeinrichtungsteilen, oder ggf. in Bereichen der Schwächungen oder Dünnstellen nicht einfallen kann, was die Ansehnlichkeit der sich den Insassen bietenden Oberfläche verbessert.

Die Varianten der Erfindung mit einem Gewebe als zumindest Bestanteil der Verbindungseinrichtungen kann dadurch weitergebildet werden, daß die Oberflächenschicht aus einer Deckschicht und einer Unterschicht besteht, und daß das Gewebe innerhalb der Deckschicht oder zwischen der Deckschicht und der Unterschicht liegt. Durch die Erfindung wird der zweiteilige Aufbau der Oberflächenschicht, wie er heute teilweise üblich ist, für eine einfache und feste Anbindung des Gewebes der Verbindungseinrichtungen an die Oberflächenschicht genutzt.

Gemäß einer weiteren Fortbildung der Erfindung können im Bereich des Umfangs der Öffnung Trennhilfeeinrichtungen vorgesehen sein, die bei einer Bewegung der Abdeckeinrichtungen aus ihrer Ruhelage die Oberflächenschicht zumindest in Bereichen zwischen dem Träger und den Abdeckeinrichtungen schwächen und/oder durchtrennen. Damit wird das Reißen der Oberflächenschicht beim Zurückziehen der Abdeckeinrichtungen weiter erleichtert. Solche Trennhilfeeinrichtungen können so angeordnet werden, daß sie auch bei einem Aufprall eines Insassen auf die darüber liegenden Bereiche des Fahrzeugteils ohne einen schützenden Airbag keine Gefahr für den Insassen darstellen. Beispielsweise können entsprechende Stege oder Rahmen vorgesehen werden, die sich bei einem Aufprall eines Insassen zwischen letzteren und die Trennhilfeeinrichtungen schieben.

Wie bereits weiter oben angegeben wurde, kann im Rahmen der Erfindung zwischen der Oberflächenschicht einerseits und dem Träger und den Abdeckeinrichtungen andererseits Schaummaterial enthalten sein, wobei dann die Verbindungseinrichtungen zwischen der Oberflächenschicht einerseits und dem Träger und den Abdeckeinrichtungen andererseits durch das Schaummaterial hindurchgehen. Derartiges Schaummaterial führt zu einem angenehmen Gefühl bei der Berührung der Oberfläche eines solchermaßen ausgestatteten Fahrzeugteils und stellt ferner bei einem Aufprall auf letzteres eine zusätzliche dämpfende Schutzschicht dar.

Im Rahmen der Erfindung wird ferner zur Erreichung des der letzteren zu Grunde liegenden Ziels ein Herstellungsverfahren für ein Fahrzeugteil nach Anspruch 10 geschaffen, das eine Airbagvorrichtung und einen Träger enthält, wobei an die Airbagvorrichtung Abdeckeinrichtungen gekoppelt sind, die vor einer Auslösung der Airbagvorrichtung in einer Ruhelage zumindest im wesentlichen bündig in einer Öffnung in dem Träger aufgenommen sind und infolge einer Auslösung der Airbagvorrichtung mittels einer Mechanik von einem Insassen weg in eine Rückzugslage zumindest im wesentlichen hinter oder in das Fahrzeugteil gebracht werden, und wobei für den Träger und die Abdeckeinrichtungen eine gemeinsame Oberflächenschicht hergestellt wird. Erfindungsgemäß wird weiterhin die Oberflächenschicht mittels Verbindungseinrichtungen im Bereich der Abdeckeinrichtungen wenigstens benachbart Teilen des Umfangs der Öffnung fest mit den Abdeckeinrichtungen und/oder der Mechanik verbunden.

Auch durch dieses Verfahren wird beim Gegenstand der vorliegenden Erfindung verhindert, daß durch das Rückziehen der Abdeckeinrichtungen Teile der Oberflächenschicht oder Außenhaut und ggf. eines Schaummaterials losgelöst und herumgeschleudert werden können. Dies führt zu einer erhöhten Sicherheit bei der Auslösung der Airbagvorrichtung.

Im speziellen befaßt sich die vorliegende Erfindung somit auch mit Techniken zum Verbinden einer Außenhaut mit Abdeckeinrichtungen bei einer Airbagvorrichtung mit einziehbaren Abdeckeinrichtungen. Aus der speziellen Verbindung der Außenhaut mit dem Klappenträger ergeben sich bestimmte Herstellungsverfahren des Fahrzeugteils.

Analog zur vorrichtungsmäßigen Realisierung des weiter oben angegebenen Ziels, sind auch bei dem durch die Erfindung geschaffenen Herstellungsverfahren für ein Fahrzeugteil Weiterbildungen möglich, für die dieselben Vorteile gelten, wie für die entsprechenden Vorrichtungsvarianten.

Die Oberflächenschicht kann beispielsweise entsprechend der Form der Öffnung und/oder der Abdeckeinrichtungen mit Schwächungen oder Dünnstellen versehen werden. Wenn die Abdeckeinrichtungen wenigstens zwei Klappen enthalten, kann die Oberflächenschicht im Bereich zwischen den Klappen mit Schwächungen oder Dünnstellen versehen werden. Diese Versionen können dadurch weitergebildet werden, daß die Schwächungen oder Dünnstellen über ihren Verlauf gleichmäßig oder stellenweise, insbesondere regelmäßig, durch Materialdünnstellen und/oder Perforationen und/oder Mikroperforationen des Materials hergestellt werden.

Eine andere bevorzugte Ausgestaltung des Herstellungsverfahren für ein Fahrzeugteil nach der Erfindung besteht darin, daß als Verbindungseinrichtungen an der Oberflächenschicht Stege und/oder Lappen angebracht oder ausgebildet, vorzugsweise integral ausgebildet, werden, die mit den Abdeckeinrichtungen und/oder der Mechanik verbunden werden.

Erfindungsgemäß ist vorgesehen, daß die Verbindungseinrichtungen Gewebematerial enthalten, das fest verbunden wird mit oder eingebracht wird in oder zwischengelegt wird zwischen Material der Oberflächenschicht und mit den Abdeckeinrichtungen und der Mechanik verbunden wird.

Ferner kann das Gewebe von den Abdeckeinrichtungen bis über den Umfang der Öffnung des Trägers hinaus vorgesehen werden, und/oder kann das Gewebe ggf. auch zumindest teilweise im Bereich von Schwächungen oder Dünnstellen längs des Umfangs der Öffnung des Trägers vorgesehen werden. Wenn die Oberflächenschicht aus einer Deckschicht und einer Unterschicht gebildet wird, kann das Gewebe innerhalb der Deckschicht oder zwischen der Deckschicht und der Unterschicht vorgesehen werden.

Auch kann verfahrensmäßig vorgesehen sein, daß im Bereich des Umfangs der Öffnung Trennhilfeeinrichtungen angeordnet werden, die bei einer Bewegung der Abdeckeinrichtungen aus ihrer Ruhelage die Oberflächenschicht zumindest in Bereichen zwischen dem Träger und den Abdeckeinrichtungen schwächen und/oder durchtrennen.

Weitere bevorzugte und vorteilhafte Ausgestaltung der Erfindung ergeben sich aus den jeweils abhängigen Ansprüchen und deren Kombinationen sowie den Darstellungen und Erläuterungen der Ausführungsbeispiele in der Zeichnung bzw. dem nachfolgenden Beschreibungsteil.

Die Erfindung wird nachfolgend anhand von Ausführungsbeispielen unter Bezugnahme auf die Zeichnung näher erläutert, in der:
- Fig. 1: ein grundsätzliches Schema einer rückziehenden Airbagklappe in einem Querschnitt zeigt,
- Fig. 2: schematisch ein erstes Ausführungsbeispiel eines Fahrzeugteils gemäß der vorliegenden Erfindung ausschnittsweise im Schnitt darstellt,
- Fig. 3: einen Zustand bei einer Ausführung eines Herstellungsverfahrens für ein zweites Ausführungsbeispiel eines Fahrzeugteils gemäß der vorliegenden Erfindung in einer schematischen Schnittdarstellung illustriert,
- Fig. 4a und 4b: zwei um 90° verschiedene schematische Schnittansichten eines Zustandes bei einer anderen Ausführung eines Herstellungsverfahrens für ein drittes Ausführungsbeispiel eines Fahrzeugteils gemäß der vorliegenden Erfindung verdeutlicht,
- Fig. 5: eine schematische teilweise Schnittdarstellung des zweiten Ausführungsbeispiels eines Fahrzeugteils gemäß der vorliegenden Erfindung ist,
- Fig. 6: eine schematische teilweise Schnittdarstellung eines vierten Ausführungsbeispiels eines Fahrzeugteils gemäß der vorliegenden Erfindung zeigt,
- Fig. 7, 8 und 9: in schematischen Schnittdarstellungen drei Zustände bei einer weiteren Ausführung eines Herstellungsverfahrens für ein fünftes Ausführungsbeispiel eines Fahrzeugteils gemäß der vorliegenden Erfindung verdeutlicht,
- Fig. 10a, b und c: schematisch ein Ausführungsbeispiel für ein Gewebe zur Verbindung der Oberflächenschicht einerseits und der Abdeckeinrichtungen und des Trägers andererseits eines erfindungsgemäßen Fahrzeugteils als perspektivische Gesamtansicht sowie von zwei Detaildarstellungen, und
- Fig. 11: eine schematische teilweise Schnittdarstellung eines fünften Ausführungsbeispiels eines Fahrzeugteils gemäß der vorliegenden Erfindung zeigt.

In den einzelnen Abbildungen der Zeichnung sind gleiche oder ähnliche oder gleich oder ähnlich wirkende Teile oder Baugruppen mit denselben Bezugszeichen versehen. Dadurch und durch die Art der Darstellung erschließen sich dem Fachmann solche Teile oder Baugruppen und deren Wirkungen und Funktionen bezüglich einzelner Darstellungen auch dann, wenn hierauf nachfolgend nicht im einzelnen eingegangen wird. Ferner können Angaben im folgenden Text durch die Darstellungen in der Zeichnung auch dann zugeordnet werden, wenn keine gesonderten Bezugszeichen verwendet werden bzw. enthalten sind. Ferner erlaubt die vergleichende Betrachtung der einzelnen Figuren sowie die detaillierte Betrachtung jeder Figur selbst auf Grund deren Darstellungen eine eindeutige Zuordnung von Teilen und Merkmalen, auch wenn diese nicht in jeder bzw. der jeweiligen Figur gekennzeichnet sind.

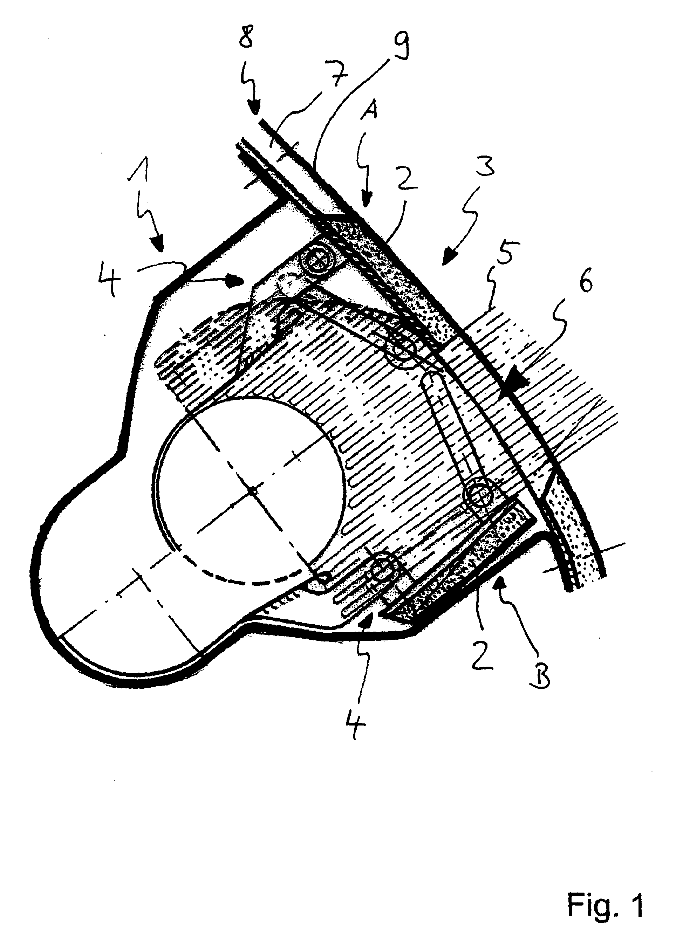

Die Fig. 1 zeigt eine ein grundsätzliches Schema eine Airbagvorrichtung 1 mit rückziehender oder rückziehenden Klappe(n) 2 als Abdeckeinrichtungen 3 in einem Querschnitt analog der technischen Lehre in den früheren Patentanmeldungen DE 197 26 878.1 und DE 197 33 896.8.

Die Abdeckeinrichtungen 3 sind an eine Mechanik 4 angeschlossen, mittels der sie aus einer Ruhelage A (siehe oben links in der Fig. 1) in eine Rückzugslage B (siehe unten rechts in der Fig. 1) gebracht werden, wenn die Airbagvorrichtung 1 ausgelöst wird. Wenn sich die Abdeckeinrichtungen 3 in der Rückzugslage B befinden kann ein Gassack 5 ungehindert durch eine Öffnung 6 in einem Träger 7 des mit der Airbagvorrichtung 1 versehenen Fahrzeugteils 8 austreten und sich zum Schutz eines Insassen (nicht gezeigt) entfalten. Der Träger 7 und die Abdeckeinrichtungen 3 sind mit einer Oberflächenschicht 9 überzogen.

Der Erfindung liegt die Idee zu Grunde, Oberflächenschicht oder Außenhaut 9 einerseits und den Träger 7 und die Abdeckeinrichtungen 3 andererseits ausreichend fest miteinander zu verbinden.

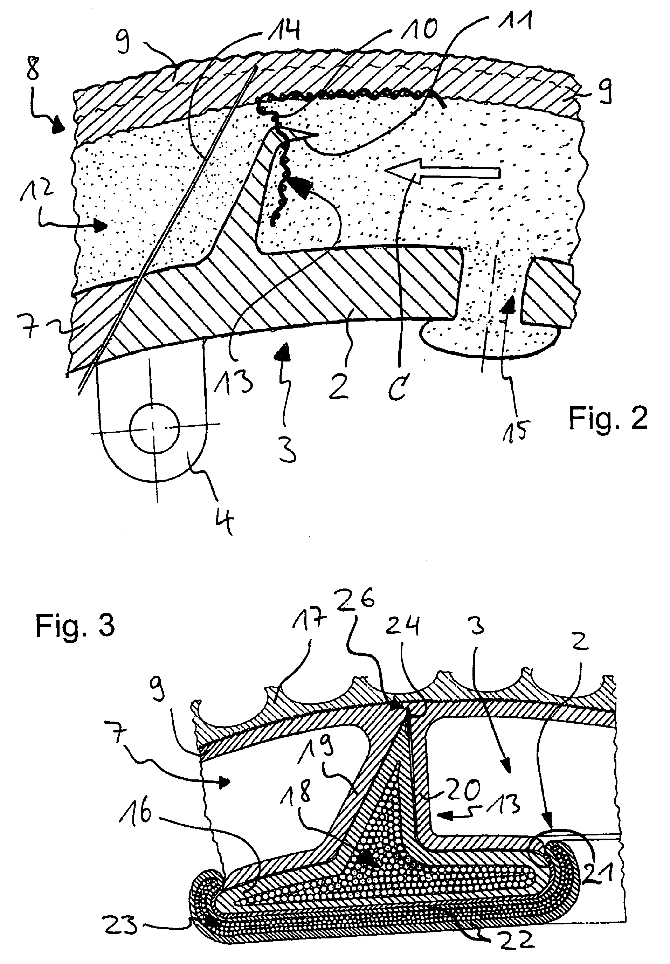

Ein erstes Ausführungsbeispiel hierfür ist in der Fig. 2 gezeigt, in der schematisch ein erstes Ausführungsbeispiel eines Fahrzeugteils gemäß der vorliegenden Erfindung ausschnittsweise im Schnitt dargestellt ist. Verfahrens- und herstellungstechnisch wird in die Oberflächenschicht oder Gießhaut 9 im noch flüssigen Zustand mit einem Formstempel (nicht gezeigt) im Bereich der Abdeckeinrichtungen 3 nahe dem Umfang der Öffnung 6 ein Gewebestück 10, in den Ansprüchen "Gewebematerial" genannt, eingedrückt, das dann mit der Oberflächenschicht oder Haut 9 verbäckt. An der Klappe 2, die insofern auch als Innenträger bezeichnet werden kann, sind Fanghaken 11 angeformt, wie z.B. an- oder aufgespritzt. Wird zwischen die Oberflächenschicht 9 einerseits und die Klappen 2 und den Träger 7 andererseits Schaummaterial 12 in der Schaumflußrichtung (Pfeil C) eingebracht, so wird das Gewebe 10, in den Ansprüchen "Gewebematerial" genannt, mitgenommen und gegen den Fanghaken 11 gespült, bleibt an letzterem hängen und verhakt sich dort. Nach den Festwerden des Schaummaterials 12 ist die Oberflächenschicht 9 mit der Klappe 2 mittels des Gewebes 10 fest verbunden, das somit Verbindungseinrichtungen 13 darstellt.

Natürlich sind auch rein mechanische Befestigungen des Gewebes 10 möglich, indem man es z.B. vor dem Schäumen durch Aussparungen (nicht gezeigt) in der Klappe 2 steckt und mechanisch fixiert. Das Gewebe 10 kann auch ein gespritztes Gitter oder ähnliches sein.

In der Fig. 2 ist noch ein Laser- oder Messerschnitt 14 veranschaulicht, mittels dem der Träger 7 und die Klappe 2, nachdem sie integral hergestellt wurden, in gewünschter und erforderlicher Weise getrennt werden, so daß sich die Klappe 2 mittels der Mechanik 4 von der Öffnung 6 wegziehen läßt (vergleiche Fig. 1). Ferner ist ein Schaumeintritt 15 gezeigt, durch den das Schaummaterial 12 im flüssigen Zustand zwischen die Oberflächenschicht 9 einerseits und die Klappen 2 und den Träger 7 andererseits eingebracht wird.

Die Fig. 3 verdeutlicht einen Zustand bei einer Ausführung eines Herstellungsverfahrens für ein zweites Ausführungsbeispiel eines Fahrzeugteils gemäß der vorliegenden Erfindung in einer schematischen Schnittdarstellung. Hier ist ein besonders hergestelltes Werkzeug 16 für die Oberflächenschicht oder Gießhaut 9 der im vorliegenden Fall das Fahrzeugteil 8 verkörpernden Instrumententafel im kritischen Ausschnitt des Übergangs des Trägers 7 der Instrumententafel zur Klappe 2 der Abdeckeinrichtungen 3 gezeigt. In eine Galvanoform 17 wird in üblicher Weise das Material der Oberflächenschicht oder Gießhaut 9 eingebracht. Eine Besonderheit der vorliegenden Erfindung ist das bewegliche Werkzeug 16, das auch als Einsatz bezeichnet werden kann und einen Kanal 18 enthält, an dem rippenartig Gießhautlappen 19 und 20 entstehen, indem der Einsatz oder das Werkzeug 16 als Hohlkörper bei dem Prozeß zum Gelieren der Gießhautlappen 19 und 20 entsprechend geheizt und gekühlt wird. In den Bereichen ohne Gelierung wird das Werkzeug 16 durch eine Zwischenschicht 21 thermisch isoliert und darüber mit einem Kanal 22 abgedeckt, der Kühlmedium 23 führt.

Dieses bewegliche Werkzeug 16 ist an der Stelle, an der sich im Falle eines Unfalls mit Auslösung der Airbagvorrichtung 1 die Oberflächenschicht oder Gießhaut 9 trennen soll, mit einem eingesetzten Messer 24 versehen. Eine Alternative ist, daß mit dem Messer 24 eine exakte Restdicke der Oberflächenschicht oder Gießhaut 9 dadurch hergestellt wird, daß beim Prozeß der Werkzeug oder der Einsatz 16 bis gegen die Galvanoform 17 gefahren wird, Anschließend wird von dieser "Nullage" der Einsatz 16 exakt z.B. lasergesteuert auf eine Spaltbreite entsprechend der Restdicke von beispielsweise einem oder wenigen zehntel Millimetern zurückgefahren. Somit wird durch das Messer 24 eine Schwächung oder Dünnstelle 26 in der Oberflächenschicht oder Gießhaut 9 hergestellt. Die Restdicke der Oberflächenschicht oder Gießhaut 9 an der Schwächung oder Dünnstelle 26 ist so bestimmt, daß einerseits die Haltbarkeit der Oberflächenschicht oder Gießhaut 9 ausreichend fest ist und andererseits die Zerreißbarkeit bei einer Airbagvorrichtungsauslösung infolge eines Unfalls ausreichend gut ist. Die Bewegung des Messers 24 kann vor, während oder nach dem Geliervorgang der Oberflächenschicht 9 stattfinden.

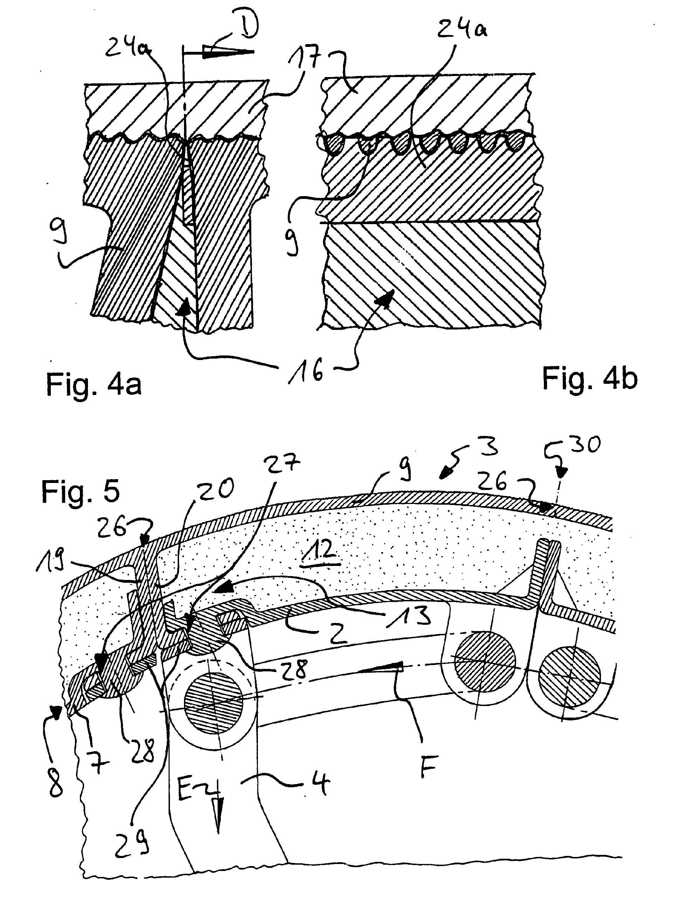

Die Fig. 4a und 4b zeigen zwei um 90° verschiedene schematische Schnittansichten eines Zustandes bei einer anderen Ausführung eines Herstellungsverfahrens für ein drittes Ausführungsbeispiel eines Fahrzeugteils gemäß der vorliegenden Erfindung. Die Ansicht der Fig. 4b ergibt sich in Blickrichtung des Pfeils D in der Fig. 4b. Das Werkzeug 16 weist bei diesem Ausführungsbeispiel ein "Perforiermesser" 24a auf, das gegen die Galvanoform 17 gedrückt wird und dann stückweise den Durchfluß des Materials der Oberflächenschicht 9 zuläßt und dadurch die Oberflächenschicht 9 linienförmig perforiert, um eine entsprechende Schwächung oder Dünnstelle 26 zu erzeugen.

Die Fig. 5 ist eine schematische teilweise Schnittdarstellung des zweiten Ausführungsbeispiels eines Fahrzeugteils gemäß der vorliegenden Erfindung und zeigt die Oberflächenschicht 9 mit den Gießhautlappen 19 und 20 verbaut in einem als Instrumententafel ausgebildeten Fahrzeugteil 8 mit einer Airbagklappe 2. Die Gießhautlappen 19 und 20 werden dazu in Lage positioniert, mit Haltelöchern 27 versehen, durch die z.B. Niete 28 gesteckt werden. Halteleisten 29 klemmen die Gießhautlappen 19 und 20 zwischen dem Instrumententafelträger 7 und dem Klappenträger oder der Klappe 2 ein. Die Fig. 5 zeigt weiterhin die Mechanik 4 und deren Anbindungen an die übrige Airbagvorrichtung (nicht gezeigt). Die Mechanik 4 führt entsprechend den Pfeilen E und F bei Auslösung der Airbagvorrichtung eine Bewegung durch und nimmt dabei die Klappe 2 von einem vor der Instrumententafel sitzenden Insassen aus gesehen nach hinten mit, der somit die die Sichtseite der Instrumententafel bildenden Oberflächenschicht 9 sieht. In der Mitte 30 am Stoß der beiden bei dem in der Fig. 5 gezeigten Ausführungsbeispiel vorgesehenen Airbagklappen 2 wird die gleiche Technik des Schneidens oder Schwächens zur Herstellung einer Schwächung oder Dünnstelle 26 angewendet, wie sie zuvor beschrieben wurde. Gießhautlappen sind hier nicht erforderlich, da diese Stelle zumindest im wesentlichen nur auf Zug und nicht auf "Zugscherung" beansprucht wird.

Die Ausführungsform in der Fig. 5 enthält Klappen 2 aus Thermoplast. Sinngemäß sind ähnliche und zumindest gleich wirkende Ausführungen aus verschiedenen anderen Konstruktionen machbar, wie beispielsweise aus Aluminiumblech.

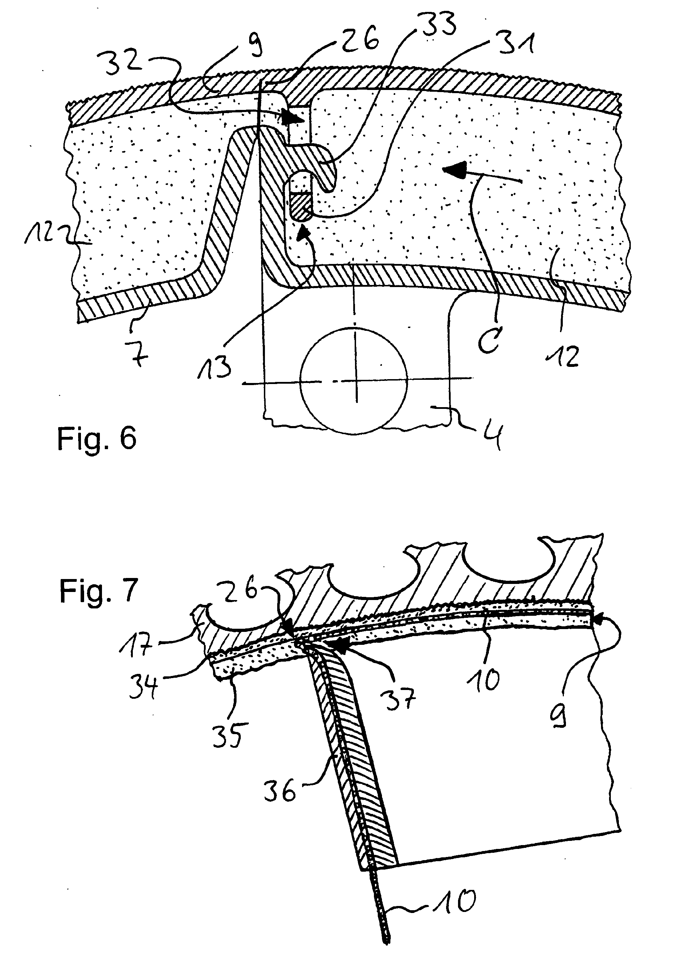

Die Fig. 6 zeigt eine schematische teilweise Schnittdarstellung eines vierten Ausführungsbeispiels eines Fahrzeugteils gemäß der vorliegenden Erfindung. Dabei handelt es sich um eine weitere Alternative der Problemlösung für den Fall, daß aus Kostengründen der Träger 7 der hier als Fahrzeugteil 8 exemplarisch gezeigten Armaturentafel und die Klappe 2 der Abdeckeinrichtungen 3 einstückig gefertigt werden sollen. Hier wird ein Lappen 31 der Oberflächenschicht oder Gießhaut 9 wie zuvor beschrieben hergestellt. Mittels Stanzen oder ähnlichem wird der Lappen 31 derart mit Löchern 32 versehen, daß diese zu Haken 33 passen, die an der Klappe 2 angebracht sind. Der Schaumfluß gemäß Pfeil C (vergleiche hierzu auch Fig. 2) spült den Lappen 31 mit seinen Löchern 32 in die Haken 33. Selbstverständlich können die Lappen 31 auch andersartig eingehängt werden. Anstelle des Lappens 31 kann während des Gelierprozesses der Oberflächenschicht oder Gießhaut 9 auch ein netzartiges Gewebe in letztere eingedrückt werden, das sich dann ebenso in Haken 33 verhängt (vergleiche Fig. 2). Die einstückig mit dem Träger 7 ausgebildete Klappe 2 muß dann, wie heute technisch üblich, rundum, z.B. mittels eines Lasers, vorgeschnitten werden. Selbstverständlich gilt diese Technik auch, wenn die Gießhaut, wie heute für verschiedene Ein- oder Zweikomponentenmaterialien üblich, ohne wechselnden Temperatureinfluß hergestellt wird.

Nachfolgend wird eine Alternative der Herstellung einer einziehbaren Airbagklappe erläutert, indem ein Gewebe als Verbindungseinrichtungen an oder in der Gießhaut z.B. einer Armaturentafel einerseits und an der Klappe der Abdeckeinrichtungen der Airbagvorrichtung andererseits befestigt wird. Methoden der Faltung, der Vorschädigung und des Einlegens werden dargestellt. Als Weiterentwicklung dient ein Gewebe zusätzlich der Vermeidung von Einfallsteilen der Folienschwächung. Als zusätzliche Hilfe kann ein Schneiderahmen verwendet werden, der das Durchtrennen der beispielsweise durch eine Folie gebildeten Oberflächenschicht unterstützt.

Die Fig. 7, 8 und 9 verdeutlichen in schematischen Schnittdarstellungen drei Zustände bei einer weiteren Ausführung eines Herstellungsverfahrens für ein fünftes Ausführungsbeispiel eines Fahrzeugteils gemäß der vorliegenden Erfindung.

In der Fig. 7 ist die Gießhaut 9, wie zunehmend üblich, aus einer Deckschicht 34 und einer Unterschicht 35 hergestellt. In diesem Fall wird ein Gewebe 10 ausreichender Zugfestigkeit während des Gelierens der Deckschicht 34 mittels eines Einlegewerkzeuges 36 eingebracht. Das beim Verfestigen der Deckschicht 34 somit an letztere angeklebte Gewebe 10 wird dann mit der Unterschicht 35 zugedeckt, und die gesamte Oberflächenschicht oder Gießhaut 9 ausreichend verfestigt.

Das Einlegewerkzeug 36 verlegt das Gewebe 10 in einer Falte 37 und verhindert gleichzeitig im späteren "Durchreißbereich" die Aufbringung der Unterschicht 35 auf die Oberschicht 34. Das Gewebe 10 ist derart in einer Falte 37 verlegt, daß es die Oberflächenschicht oder Gießhaut 9 durch ihre im Bereich der Falte 37 doppelte Lage in der im Bereich der Falte 37 gebildeten Sollbruch- oder -reißlinie verstärkt, damit kein "Einfallen" der Oberflächenschicht oder Gießhaut 9 in der geschwächten Linie zur Bildung einer Schwächung oder Dünnstelle 26 stattfindet. Das Verhindern des Aufbringens der Unterschicht 35 mit dem Einlegewerkzeug 36 entlang des "Durchreißbereiches" erspart das Einschneiden der Oberflächenschicht oder Gießhaut 9, wie es z.B. bei den in den Fig. 3 sowie 4a und 4b gezeigten Ausführungsbeispielen zur Bildung einer Schwächung oder Dünnstelle 26 eingesetzt wird.

Bei dem Ausführungsbeispiel gemäß der Fig. 7 wird somit ein Gewebe 10 zwischen der Deckschicht 34 und der Unterschicht 35 der Oberflächenschicht oder Gießhaut 9 während deren Herstellungsprozeß plaziert. Das Einlegewerkzeug 36 legt das Gewebe 10 derart ein, daß sich eine Gewebefalte 37 als Abstützfalte bildet, die eine Verstärkung der Schwächung oder Dünnstelle 26 darstellt, die weiterhin noch durch Weglassen der Unterschicht 35 linienförmig entlang der Kante der Klappe 2 der Abdeckeinrichtungen 3 durch entsprechende Plazierung des Einlagewerkzeugs 36 geschwächt wird.

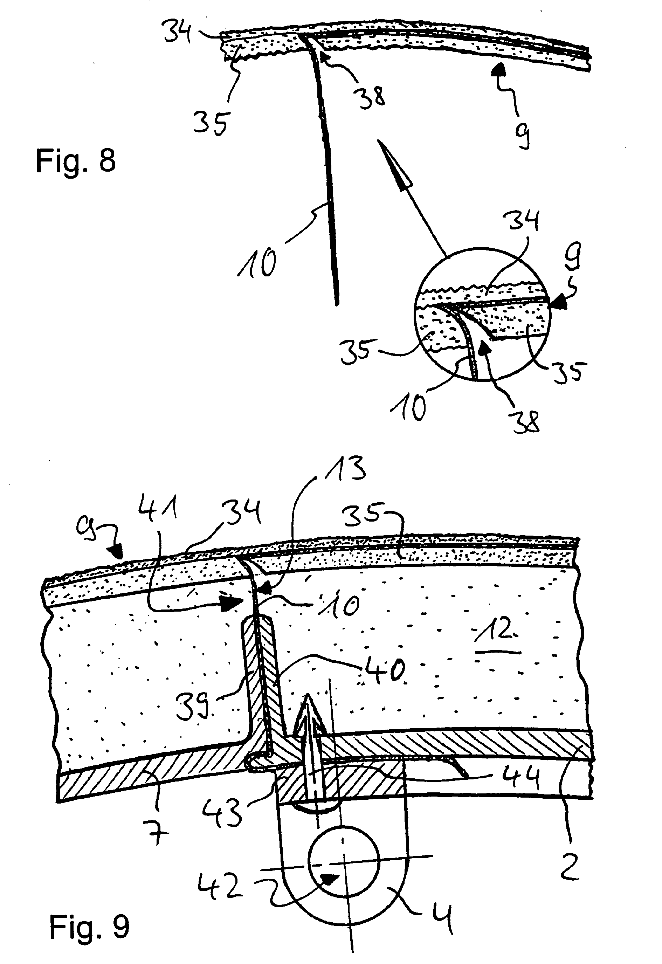

Die Fig. 8 zeigt die dem Gießwerkzeug 17 entnommene Gießhaut 9 mit dem Gewebe 10, der Gewebefalte 37 und der Aussparung 38 in der Unterschicht 35 in einer Darstellung in zur Fig. 7 analoger Größe und in einer vergrößerten Darstellung.

In der Fig. 9 ist der Zusammenbau der einzelnen Komponenten in dem Fahrzeugteil 8, wie z.B. einer Armaturentafel, gezeigt. Das Gewebe 10 wird zwischen der Airbagklappe 2 und dem Armaturentafelträger 7 verlegt, wie in der Fig. 9 gezeigt ist. Hierbei sorgen die halbhohen Wände 39 und 40 dafür, daß das Schaummaterial den Bereich des Armaturentafelträgers 7 und der Airbagklappe 2 zum leichten Öffnen der letzteren weitgehend in Einzelteile separieren. Ein beispielsweise experimentell zu ermittelnder Schaumdurchgang 41 sichert die Stabilität der Einheit Airbagklappe 2 und Armaturentafelträger 7.

Das aus diesem Zusammenbau herausstehende Gewebe 10 z.B. wird mit der Airbagklappe 2 verklebt und/oder mit der an letzterer zu befestigenden Mechanik 4 verklemmt und bildet so Verbindungseinrichtungen 13 zwischen der Oberflächenschicht 9 und der Klappe 2. Für die Alternative, in der der Zugrahmen in Form seiner Zugösen einstöckig mit dem Airbagdeckelboden hergestellt wird, kann das Gewebe nur mit dem Airbeckdeckelboden verklebt, verschweißt oder in entsprechend plazierte Haken eingehängt werden.

Die Fig. 9 zeigt das in die Gießhaut 9 eingelegte Gewebe 10 zwischen dem Armaturentafelträger 7 und der Airbagklappe 2 plaziert. Zwei Wände 39 und 40 sorgen für eine abgestimmte Trennung von Armaturentafelträger 7 und Airbagklappe 2. Entweder sind die Zugösen 42 direkt mit der Airbagklappe 2 verbunden oder über einen Zugrahmen 43 verschraubt, vernietet oder verklebt (Bezugszeichen 44). Das Gewebe 10 ist entsprechend eingeklemmt oder verklebt. Im beispielsweise durch Roboter (nicht gezeigt) fixierten Zustand werden die Bauteile 9, 7 und 2 miteinander verschäumt.

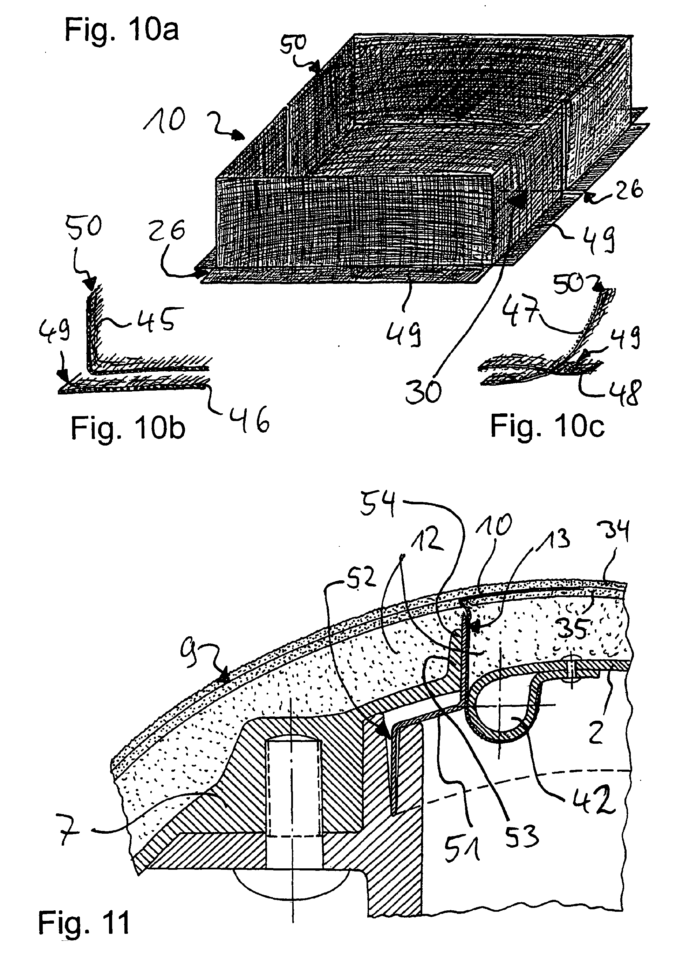

Die Fig. 10a, b und c zeigen schematisch ein Ausführungsbeispiel für ein Gewebe zur Verbindung der Oberflächenschicht einerseits und der Abdeckeinrichtungen und des Trägers andererseits eines erfindungsgemäßen Fahrzeugteils als perspektivische Gesamtansicht sowie von zwei Detaildarstellungen. Die Fig. 10a zeigt ein Gewebe 10, daß anstelle einer Falte aus zwei Gewebeteilen 45 und 46 (Fig. 10b) oder einem einstückig gewebten Gewebe 10 mit zwei Enden 47 und 48 (Fig. 10c) hergestellt wird. Letzteres Weben wird wie bei der nicht genähten Herstellung von Airbags durchgeführt. In beiden Fällen der Herstellung steht ein Gewebesaum 49 über, der benutzt wird zur Stabilisierung des Einfallens der Oberflächenschicht 9 entlang der Schwächung oder Reißnaht 26. Das Gewebe 10 ist dort zum leichteren Durchreißen entsprechend vorgeschädigt oder so kurz, daß es von der Oberflächenschicht 9 weggezogen werden kann. Das übrige Gewebe 10 ist passend zur Einbringung in das Einlegewerkzeug 17 zugeschnitten und gefaltet. Beide Gewebehälfen sind an der mittleren Durchreißstelle getrennt oder entsprechend vorgeschädigt.

Die Fig. 10a zeigt die Faltung und den Zuschnitt des vorgenannten Gewebes 10 alternativ derart, daß es aus zwei Gewebelagen 45 und 66 (Fig. 10b) oder mit zwei offenen Enden 47 und 48, wie bei Airbags üblich, gewebt wird. Die kurzen Enden 49 dienen bei Einlage der Verstärkung der Gießhaut 9 im geschwächten Bereich der Schwächung 26. An den langen Enden 50 greift die Airbagmechanik (nicht gezeigt) zum Öffnen der Klappen (nicht gezeigt) an.

Das Gewebe 10 ist in der Mitte 30 entsprechend getrennt oder vorgeschädigt, um die Airbagklappen 2 öffnen zu können. Ebenso ist der Verstärkungsrand 49 zum Abreißen vorgeschädigt oder kurz genug zum Ausreißen aus der Oberflächenschicht oder Gießhaut 9.

Die Fig. 11 zeigt eine schematische teilweise Schnittdarstellung eines fünften Ausführungsbeispiels eines Fahrzeugteils gemäß der vorliegenden Erfindung. In der Fig. 11 ist ein Ausschnitt eines Armaturentafelträgers 7 und einer Airbagklappe 2 gezeigt, bei dem zusätzlich zur Gewebeanbindung der Oberflächenschicht oder Gießhaut 9 ein Folienschneiderahmen als Trennhilfeeinrichtungen 51 eingelegt ist. Der Folienschneiderahmen 51 wird vor oder nach dem Schäumprozeß eingelegt bzw. gedrückt und erhält seine Abstützung mit dem Anschrauben des Airbagmodules (nicht gezeigt). Der Schneiderahmen 51 wird dann rundum in einem entsprechenden Schlitz 52 fixiert und abgestützt. Eine Stützrippe 53 am Armaturentafelträger 7 ist derart in der Länge abgestimmt, daß bei einem Kopfaufschlag eines Insassen ein Abtauchen des Folienschneiderahmens 51 hinter die Oberkante 54 der Stützrippe 53 möglich ist.

Bei der Ausführung gemäß der Fig. 11 ist zusätzlich zur Gewebeeinlage 10 (Gewebematerial) noch ein Folienschneiderahmen 51 vorgesehen. Dieser Folienschneiderahmen 51 wird zwischen Armaturentafelträger 7 und Airbagklappe 2 plaziert. Der Folienschneiderahmen 51 wird vor oder nach der Verschäumung eingelegt oder eingedrückt. Nach der Montage des Airbagmodules (nicht gezeigt) ist der Folienschneiderahmen 51 rundum in einem Schlitz 52 gelagert. Der Folienschneiderahmen 51 dient dem Durchtrennen der verbliebenen Oberflächenschicht 9. Bei einem Kopfaufschlag läßt eine Stützrippe 53 den Folienschneiderahmen 51 bis zur Oberkante 54 der Stützrippe 53 abtauchen. Die Airbagklappe 2 besteht in diesem Fall alternativ aus Metall (z.B. Aluminium) und ist mit seiner Zugöse 42 mit dem Gewebe 10 verklebt.

Nachfolgend werden lediglich beispielsweise noch einige bevorzugte Ausgestaltungen der erfindungsgemäßen Airbagvorrichtung, ihres Herstellungsverfahrens oder ihres Auslöseverfahrens angegeben:

Es kann ein ein beweglicher Einsatz in einem Werkzeug zur Herstellung von Gießhautlappen an einer Gießhaut oder Oberflächenschicht vorgesehen sein. Ein Einsatzrahmen kann gekühlt und geheizt und isoliert zur gezielten Herstellung von Gießhautlappen sein. Ein Einsatz kann derart mit einem eingesetzten Messer versehen sein, daß dieses die Gießhaut zwischen den Lappen verbindet und für den Crashfall die Gießhaut schwächt. Ein kann Einsatz derart z.B. lasergesteuert in seiner Längsbewegung sein, daß er zuerst gegen die Galvanoschale auf "Null" gefahren wird und dann.laservermessen exakt die z.B. einen oder einige zehntel Millimeter zurückfährt, so daß Haltbarkeit und Schwächung der Gießhaut optimiert werden. Die Bewegung kann vor, während oder nach dem Geliervorgang stattfinden. Ein Messer kann mit eingekerbter Schneide derart versehen sein, daß es auf "Null" gegen die Galvanoschale gefahren die Gießhaut perforiert, d.h. zwischen Schlitzen Stege stehen läßt. Gießhautlappen mit Löchern versehen verfängt sich an Haken, die am Airbagklappenträger befestigt sind. Eine Einhängemöglichkeit des Gießhautlappens kann durch den gezielten Schaumfluß realisiert werden. Ein Ersatz des Gießhautlappens besteht z.B. in einem netzartigen Gewebe, das in die Gießhaut während des Gelierprozesses eingedrückt wird.

## Patentansprüche

1. Fahrzeugteil mit einer Airbagvorrichtung (1) und einem Träger (7), wobei an die Airbagvorrichtung Abdeckeinrichtungen (3) gekoppelt sind, die vor einer Auslösung der Airbagvorrichtung in einer Ruhelage (A) zumindest im wesentlichen bündig in einer Öffnung (6) in dem Träger aufgenommen sind und infolge einer Auslösung der Airbagvorrichtung mittels einer Mechanik (4) von einem Insassen weg in eine Rückzugslage (B) zumindest im wesentlichen hinter oder in das Fahrzeugteil gebracht werden, und wobei in der Ruhelage der Träger und die Abdeckeinrichtungen zum Insassen hin eine gemeinsame Oberflächenschicht (9), aufweisen, wobei Verbindungseinrichtungen (13) vorgesehen sind, über die die Oberflächenschicht im Bereich der Abdeckeinrichtungen wenigstens benachbart Teilen des Umfangs der Öffnung fest mit den Abdeckeinrichtungen verbunden ist, **dadurch gekennzeichnet,**
**dass** die Verbindungseinrichtungen (13) Gewebematerial (10) enthalten, das fest verbunden ist mit oder enthalten ist in oder umgeben ist von dem Material der Oberflächenschicht (9), und
**dass** das Gewebematerial (10) mit den Abdeckeinrichtungen (3) und der Mechanik (4) verbunden ist.

2. Fahrzeugteil nach Anspruch 1, **dadurch gekennzeichnet, daß** die Oberflächenschicht entsprechend der Form der Öffnung und/oder der Abdeckeinrichtungen mit Schwächungen oder Dünnstellen (26) versehen ist.

3. Fahrzeugteil nach Anspruch 1 oder 2, **dadurch gekennzeichnet, daß** die Abdeckeinrichtungen wenigstens zwei Klappen enthalten, und daß die Oberflächenschicht im Bereich zwischen den Klappen mit Schwächungen oder Dünnstellen versehen ist.

4. Fahrzeugteil nach Anspruch 2 oder 3, **dadurch gekennzeichnet, daß** die Schwächungen oder Dünnstellen über ihren Verlauf gleichmäßige oder stellenweise, insbesondere regelmäßige, Materialdünnstellen und/oder Perforationen und/oder Mikroperforationen des Materials der Oberflächenschicht (9) enthalten.

5. Fahrzeugteil nach einem der vorhergehenden Ansprüche, **dadurch gekennzeichnet, daß** die Verbindungseinrichtungen an der Oberflächenschicht angebrachte oder ausgebildete, vorzugsweise integral ausgebildete Stege und/oder Lappen enthalten, die mit den Abdeckeinrichtungen und/oder der Mechanik verbunden sind.

6. Fahrzeugteil nach einem der vorhergehenden Ansprüche, **dadurch gekennzeichnet, daß** das Gewebematerial von den Abdeckeinrichtungen bis über den Umfang der Öffnung des Trägers hinaus reicht, und/oder daß das Gewebematerial ggf. auch zumindest teilweise im Bereich von Schwächungen oder Dünnstellen längs des Umfangs der Öffnung des Trägers vorgesehen ist.

7. Fahrzeugteil nach Anspruch 6, **dadurch gekennzeichnet, daß** die Oberflächenschicht aus einer Deckschicht und einer Unterschicht besteht, und daß das Gewebematerial innerhalb der Deckschicht oder zwischen der Deckschicht und der Unterschicht liegt.

8. Fahrzeugteil nach einem der vorhergehenden Ansprüche, **dadurch gekennzeichnet, daß** im Bereich des Umfangs der Öffnung Trennhilfeeinrichtungen vorgesehen sind, die bei einer Bewegung der Abdeckeinrichtungen aus ihrer Ruhelage die Oberflächenschicht zumindest in Bereichen zwischen dem Träger und den Abdeckeinrichtungen schwächen und/oder durchtrennen.

9. Fahrzeugteil nach einem der vorhergehenden Ansprüche, **dadurch gekennzeichnet, daß** zwischen der Oberflächenschicht einerseits und dem Träger und den Abdeckeinrichtungen andererseits Schaummaterial (12) enthalten ist, und daß die Verbindungseinrichtungen zwischen der Oberflächenschicht einerseits und dem Träger und den Abdeckeinrichtungen andererseits durch das Schaummaterial hindurchgehen.

10. Herstellungsverfahren für ein Fahrzeugteil, das eine Airbagvorrichtung (1) und einen Träger (7) enthält, wobei an die Airbagvorrichtung Abdeckeinrichtungen (3), gekoppelt sind, die vor einer Auslösung der Airbagvorrichtung in einer Ruhelage (A) zumindest im wesentlichen bündig in einer Öffnung (6) in dem Träger aufgenommen sind und infolge einer Auslösung der Airbagvorrichtung mittels einer Mechanik (4) von einem Insassen weg in eine Rückzugslage (B) zumindest im wesentlichen hinter oder in das Fahrzeugteil gebracht werden, und wobei in der Ruhelage für den Träger und die Abdeckeinrichtungen eine gemeinsame Oberflächenschicht (9) hergestellt wird, und wobei die Oberflächenschicht mittels Verbindungseinrichtungen (13) im Bereich der Abdeckeinrichtungen wenigstens benachbart Teilen des Umfangs der Öffnung fest mit den Abdeckeinrichtungen und/oder der Mechanik verbunden wird, **dadurch gekennzeichnet, daß** die Verbindungseinrichtungen Gewebematerial (10) enthalten, das fest verbunden wird mit oder eingebracht wird in oder zwischengelegt wird zwischen Material der Oberflächenschicht und mit den Abdeckeinrichtungen und der Mechanik verbunden wird.

11. Herstellungsverfahren für ein Fahrzeugteil nach Anspruch 10, **dadurch gekennzeichnet, daß** die Oberflächenschicht entsprechend der Form der Öffnung und/oder der Abdeckeinrichtungen mit Schwächungen oder Dünnstellen (26) versehen wird.

12. Herstellungsverfahren für ein Fahrzeugteil nach Anspruch 11, wobei die Abdeckeinrichtungen wenigstens zwei Klappen enthalten, **dadurch gekennzeichnet, daß** die Oberflächenschicht im Bereich zwischen den Klappen mit Schwächungen oder Dünnstellen versehen wird.

13. Herstellungsverfahren für ein Fahrzeugteil nach Anspruch 12, **dadurch gekennzeichnet, daß** die Schwächungen oder Dünnstellen über ihren Verlauf gleichmäßig oder stellenweise, insbesondere regelmäßig, durch Materialdünnstellen und/oder Perforationen und/oder Mikroperforationen des Materials der Oberflächenschicht (9) hergestellt werden.

14. Herstellungsverfahren für ein Fahrzeugteil nach einem der Ansprüche 10 bis 13, **dadurch gekennzeichnet, daß** als Verbindungseinrichtungen an der Oberflächenschicht Stege und/oder Lappen angebracht oder ausgebildet, vorzugsweise integral ausgebildet, werden, die mit den Abdeckeinrichtungen und/oder der Mechanik verbunden werden.

15. Herstellungsverfahren für ein Fahrzeugteil nach einem der Ansprüche 10 bis 14, **dadurch gekennzeichnet, daß** das Gewebematerial von den Abdekkeinrichtungen bis über den Umfang der Öffnung des Trägers hinaus vorgesehen wird, und/oder daß das Gewebematerial ggf. auch zumindest teilweise im Bereich von Schwächungen oder Dünnstellen längs des Umfangs der Öffnung des Trägers vorgesehen wird.

16. Herstellungsverfahren für ein Fahrzeugteil nach Anspruch 15, **dadurch gekennzeichnet, daß** die Oberflächenschicht aus einer Deckschicht und einer Unterschicht gebildet wird, und daß das Gewebematerial innerhalb der Deckschicht oder zwischen der Deckschicht und der Unterschicht vorgesehen wird.

17. Herstellungsverfahren für ein Fahrzeugteil nach einem der Ansprüche 10 bis 16, **dadurch gekennzeichnet, daß** im Bereich des Umfangs der Öffnung Trennhilfeeinrichtungen angeordnet werden, die bei einer Bewegung der Abdeckeinrichtungen aus ihrer Ruhelage die Oberflächenschicht zumindest in Bereichen zwischen dem Träger und den Abdeckeinrichtungen schwächen und/oder durchtrennen.

## Claims

1. Vehicle part with an airbag device (1) and a carrier (7), cover devices (3) being coupled to the airbag device and being accommodated in a position of rest (4) at least essentially flush in an opening (6) in the carrier prior to triggering of the airbag device and being moved at least essentially behind or into the vehicle part away from a vehicle occupant and into a withdrawal position (B) owing to triggering of the airbag device by means of a mechanism (4), and the carrier and the cover devices having in the position of rest a common surface layer (9) in the direction of the vehicle occupant, connecting devices (13) being provided by means of which the surface layer is permanently connected to the cover devices in the region of the cover devices at least adjacent to parts of the circumference of the opening, **characterized in that** the connecting devices (13) contain fabric material (10) which is permanently connected or contained in or surrounded by the material of the surface layer (9), and **in that** the fabric material (10) is connected to the cover devices (3) and the mechanism (4).

2. Vehicle part according to Claim 1, **characterized in that** the surface layer is provided with weakened portions or thin points (26) corresponding to the shape of the opening and/or the cover devices.

3. Vehicle part according to Claim 1 or 2,
**characterized in that** the cover devices contain at least two flaps, and **in that** the surface layer is provided with weakened portions or thin points in the region between the flaps.

4. Vehicle part according to Claim 2 or 3,
**characterized in that** the weakened portions or thin points contain thin points in the material and/or perforations and/or microperforations in the material of the surface layer (9) which are uniform or in certain locations, in particular regular locations, over their profile.

5. Vehicle part according to one of the preceding claims, **characterized in that** the connecting devices contain webs and/or tabs which are provided or formed, preferably formed integrally, on the surface layer and are connected to the cover devices and/or the mechanism.

6. Vehicle part according to one of the preceding claims, **characterized in that** the fabric material extends from the cover devices over the circumference of the opening in the carrier, and/or **in that** the fabric material is, if appropriate, also provided at least partially in the region of weakened portions or thin points along the circumference of the opening in the carrier.

7. Vehicle part according to Claim 6, **characterized in that** the surface layer is composed of a cover layer and an underlying layer, and **in that** the fabric material is located within the cover layer or between the cover layer and the underlying layer.

8. Vehicle part according to one of the preceding claims, **characterized in that** separating aid devices are provided in the region of the circumference of the opening and when there is a movement of the cover devices out of their position of rest said separating aid devices weaken and/or cut the surface layer at least in regions between the carrier and the cover devices.

9. Vehicle part according to one of the preceding claims, **characterized in that** foamed material (12) is contained between the surface layer on the one hand and the carrier and the cover devices on the other, and **in that** the connecting devices penetrate the foamed material between the surface layer on the one hand and the carrier and the cover devices on the other.

10. Manufacturing method for a vehicle part which contains an airbag device (1) and a carrier (7), cover devices (3) being coupled to the airbag device and being accommodated in a position of rest (4) at least essentially flush in an opening (6) in the carrier prior to triggering of the airbag device and being moved at least essentially behind or into the vehicle part away from a vehicle occupant and into a withdrawal position (B) owing to triggering of the airbag device by means of a mechanism (4), and a common surface layer (9) being produced in the position of rest for the carrier and the cover devices, and the surface layer being permanently connected by means of connecting devices (13) to the cover devices and/or to the mechanism in the region of the cover devices at least adjacent to parts of the circumference of the opening, **characterized in that** the connecting devices contain fabric material (10) which is permanently connected to or introduced or intermediately positioned in material of the surface layer and is connected to the cover devices and to the mechanism.

11. Manufacturing method for a vehicle part according to Claim 10, **characterized in that** the surface layer is provided with weakened portions or thin points (26) corresponding to the shape of the opening and/or the cover devices.

12. Manufacturing method for a vehicle part according to Claim 11, the cover devices containing at least two flaps, **characterized in that** the surface layer is provided with weakened portions or thin points in the region between the flaps.

13. Manufacturing method for a vehicle part according to Claim 12, **characterized in that** the weakened portions or thin points are produced by thin points in the material and/or perforations and/or microperforations in the material of the surface layer (9) which are uniform or in certain locations, in particular regular locations, over their profile.

14. Manufacturing method for a vehicle part according to one of Claims 10 to 13, **characterized in that** webs and/or tabs which are connected to the cover devices and/or the mechanism are provided or formed, preferably formed integrally, as connecting devices on the surface layer.

15. Manufacturing method for a vehicle part according to one of Claims 10 to 14, **characterized in that** the fabric material is provided from the cover devices over the circumference of the opening in the carrier, and/or in that the fabric material is, if appropriate, also provided at least partially in the region of weakened portions or thin points along the circumference of the opening in the carrier.

16. Manufacturing method for a vehicle part according to Claim 15, **characterized in that** the surface layer is composed of a cover layer and an underlying layer, and **in that** the fabric material is provided within the cover layer or between the cover layer and the underlying layer.

17. Manufacturing method for a vehicle part according to one of Claims 10 to 16, **characterized in that** separating aid devices are arranged in the region of the circumference of the opening and when there is a movement of the cover devices out of their position of rest said separating aid devices weaken and/or cut the surface layer at least in regions between the carrier and the cover devices.

## Revendications

1. Partie de véhicule comprenant un dispositif d'airbag (1) et un support (7), des dispositifs de recouvrement (3) étant raccordés au dispositif d'airbag, lesquels sont reçus avant un déclenchement du dispositif d'airbag dans une position de repos (A) au moins essentiellement en affleurement dans une ouverture (6) dans le support et suite à un déclenchement du dispositif d'airbag, sont amenés au moyen d'un mécanisme (4) à l'écart d'un occupant dans une position de retrait (B) au moins sensiblement derrière ou dans la partie de véhicule, et où, dans la position de repos, le support et les dispositifs de recouvrement présentent une couche de surface (9) commune vers l'occupant, des dispositifs de connexion (13) étant prévus pour permettre de connecter fixement aux dispositifs de recouvrement la couche de surface dans la région des dispositifs de recouvrement au moins à proximité de pièces de la périphérie de l'ouverture,
**caractérisée en ce que**
les dispositifs de connexion (13) contiennent un matériau à base de tissu (10) qui est connecté fixement au matériau de la couche de surface (9) ou qui est contenu dans celui-ci ou entouré par celui-ci, et
**en ce que** le matériau à base de tissu (10) est connecté aux dispositifs de recouvrement (3) et au mécanisme (4).

2. Partie de véhicule selon la revendication 1, **caractérisée en ce que** la couche de surface est pourvue d'affaiblissements ou de parties amincies (26) en fonction de la forme de l'ouverture et/ou des dispositifs de recouvrement.

3. Partie de véhicule selon la revendication 1 ou 2, **caractérisée en ce que** les dispositifs de recouvrement contiennent au moins deux volets et **en ce que** la couche de surface est prévue dans la région entre les volets d'affaiblissements ou de parties amincies.

4. Partie de véhicule selon la revendication 2 ou 3, **caractérisée en ce que** les affaiblissements ou les parties amincies contiennent sur leur prolongement des amincissements de matériau et/ou des perforations et/ou des microperforations du matériau de la couche de surface (9) répartis uniformément ou par endroits, notamment régulièrement.

5. Partie de véhicule selon l'une quelconque des revendications précédentes, **caractérisée en ce que** les dispositifs de connexion contiennent des nervures et/ou des pattes montées ou réalisées sur la couche de surface, de préférence réalisées intégralement, qui sont connectées aux dispositifs de recouvrement et/ou au mécanisme.

6. Partie de véhicule selon l'une quelconque des revendications précédentes, **caractérisée en ce que** le matériau à base de tissu s'étend depuis les dispositifs de recouvrement jusqu'au-delà de la périphérie de l'ouverture du support, et/ou **en ce que** le matériau à base de tissu est éventuellement aussi prévu au moins en partie dans la région d'affaiblissements ou de parties amincies le long de la périphérie de l'ouverture du support.

7. Partie de véhicule selon la revendication 6, **caractérisée en ce que** la couche de surface se compose d'une couche de recouvrement et d'une couche sous-jacente, et **en ce que** le matériau à base de tissu se situe à l'intérieur de la couche de recouvrement ou entre la couche de recouvrement et la couche sous-jacente.

8. Partie de véhicule selon l'une quelconque des revendications précédentes, **caractérisée en ce que** dans la région de la périphérie de l'ouverture sont prévus des dispositifs facilitant la séparation, qui dans le cas d'un déplacement des dispositifs de recouvrement hors de leur position de repos, affaiblissent et/ou sectionnent la couche de surface au moins dans les régions entre le support et les dispositifs de recouvrement.

9. Partie de véhicule selon l'une quelconque des revendications précédentes, **caractérisée en ce que** du matériau en mousse (12) est prévu entre la couche de surface d'une part et le support et les dispositifs de recouvrement d'autre part, et **en ce que** les dispositifs de connexion passent à travers le matériau en mousse entre la couche de surface d'une part et le support et les dispositifs de recouvrement d'autre part.

10. Procédé de fabrication d'une partie de véhicule, qui contient un dispositif d'airbag (1) et un support (7), des dispositifs de recouvrement (3) étant raccordés au dispositif d'airbag, lesquels sont reçus avant un déclenchement du dispositif d'airbag dans une position de repos (A) au moins essentiellement en affleurement dans une ouverture (6) dans le support et suite à un déclenchement du dispositif d'airbag, sont amenés au moyen d'un mécanisme (4) à l'écart d'un occupant dans une position de retrait (B) au moins sensiblement derrière ou dans la partie de véhicule, et où, dans la position de repos, une couche de surface (9) commune est créée pour le support et les dispositifs de recouvrement, et où la couche de surface est connectée fixement aux dispositifs de recouvrement et/ou au mécanisme au moyen de dispositifs de connexion (13) dans la région des dispositifs de recouvrement au moins à proximité de pièces de la périphérie de l'ouverture, **caractérisé en ce que** les dispositifs de connexion contiennent un matériau à base de tissu (10) qui est connecté fixement au matériau de la couche de surface ou qui est contenu dans celui-ci ou qui est interposé entre celui-ci et qui est connecté aux dispositifs de recouvrement et au mécanisme.

11. Procédé de fabrication d'une partie de véhicule selon la revendication 10, **caractérisé en ce que** la couche de surface est pourvue d'affaiblissements ou de parties amincies (26) en fonction de la forme de l'ouverture et/ou des dispositifs de recouvrement.

12. Procédé de fabrication d'une partie de véhicule selon la revendication 11, dans lequel les dispositifs de recouvrement contiennent au moins deux volets, **caractérisé en ce que** la couche de surface est prévue dans la région entre les volets d'affaiblissements ou de parties amincies.

13. Procédé de fabrication d'une partie de véhicule selon la revendication 12, **caractérisé en ce que** les affaiblissements ou les parties amincies sont fabriqués sur leur prolongement, de manière uniforme ou par endroits, notamment régulièrement, par des amincissements de matériau et/ou des perforations et/ou des microperforations du matériau de la couche de surface (9).

14. Procédé de fabrication d'une partie de véhicule selon l'une quelconque des revendications 10 à 13, **caractérisé en ce que**, en tant que dispositifs de connexion, des nervures et/ou des pattes sont montées ou réalisées sur la couche de surface, de préférence réalisées intégralement, qui sont connectées aux dispositifs de recouvrement et/ou au mécanisme.

15. Procédé de fabrication d'une partie de véhicule selon l'une quelconque des revendications 10 à 14, **caractérisé en ce que** le matériau à base de tissu est prévu depuis les dispositifs de recouvrement jusqu'au-delà de la périphérie de l'ouverture du support, et/ou **en ce que** le matériau à base de tissu est éventuellement aussi prévu au moins en partie dans la région d'affaiblissements ou de parties amincies le long de la périphérie de l'ouverture du support.

16. Procédé de fabrication d'une partie de véhicule selon la revendication 15, **caractérisé en ce que** la couche de surface est formée d'une couche de recouvrement et d'une couche sous-jacente, et **en ce que** le matériau à base de tissu se situe à l'intérieur de la couche de recouvrement ou entre la couche de recouvrement et la couche sous-jacente.

17. Procédé de fabrication d'une partie de véhicule selon l'une quelconque des revendications 10 à 16, **caractérisé en ce que** dans la région de la périphérie de l'ouverture sont disposés des dispositifs facilitant la séparation, qui dans le cas d'un déplacement des dispositifs de recouvrement hors de leur position de repos, affaiblissent et/ou sectionnent la couche de surface au moins dans les régions entre le support et les dispositifs de recouvrement.
